# EUROPEAN PATENT SPECIFICATION

(11) **EP 4 596 763 B1**
(45) Date of publication and mention of the grant of the patent: **11.03.2026**
(21) Application number: 24168354.9
(22) Date of filing: 04.04.2024
(51) Int. Cl.: C25D 17/06, C25D 17/04, C25D 21/10, C25D 5/08, C25D 17/28, B65G 49/04

(54) **VERTICAL CONTINUOUS PLATING DEVICE ENABLING TO CONTROL PLATING DEVIATION BASED ON THICKNESS DIFFERENCE OF TO-BE-PLATED OBJECTS**
VERTIKALE KONTINUIERLICHE PLATTIERUNGSVORRICHTUNG ZUR STEUERUNG DER PLATTIERUNGSABWEICHUNG AUF BASIS DER DICKENDIFFERENZ ZU BESCHICHTENDER OBJEKTE
DISPOSITIF DE PLACAGE CONTINU VERTICAL PERMETTANT DE CONTRÔLER LA DÉVIATION DE PLACAGE SUR LA BASE DE LA DIFFÉRENCE D'ÉPAISSEUR D'OBJETS À PLAQUER

(30) Priority: 05.02.2024 KR 20240017277
(43) Date of publication of application: 06.08.2025
(73) Proprietor: TPS Elecomm CO., LTD., Ansan-si Gyeonggi-do (KR)
(72) Inventor: PARK, Jong Ki, Ansan-si (KR); SEO, Min Oh, Siheung-si (KR)
(74) Representative: Lambacher, Michael

(56) References cited:
- JP-A- H0 361 399
- JP-A- H0 726 396
- KR-B1- 101 669 803
- KR-B1- 102 101 590
- KR-B1- 102 539 090
- TW-A- 201 408 822

## Description

### BACKGROUND OF THE INVENTION

### 1. Field of the Invention

The present invention relates to a vertical continuous plating device enabling to control plating deviation based on a thickness difference of objects which is to be plated (hereinafter referred to as "to-be-plated objects"), and more particularly, to such a vertical continuous plating device enabling to control plating deviation based on a thickness difference of to-be-plated objects, which enables the control of the arrangement angle and forward/backward and left/right displacement of to-be-plated objects within a plating tank to maximize an educt effect for the to-be-plated objects within the plating tank as well as to achieve uniform plating quality even for to-be-plated objects having different thicknesses, resulting in improvements in the manufacturing yield and the quality and an increase in space utilization compared to the same space due to a reduction in the size of the plating tank to enable the installation of multiple plating lines, thereby ensuring advantageous application in multi-variety and small-batch production and mass production.

### 2. Description of Related Art

In general, a vertical continuous plating device, one of the conventional forms of electroplating lines, is a device in which substrates are hung vertically on a conveyor allowing current to flow therethrough to deposit plating materials onto their surfaces, unlike a conventional plating device with a plating tank. Such a vertical continuous plating device includes an eductor for circulating a plating solution, removing air adhered to the substrates, and maximizing plating in small holes.

In particular, this vertical continuous plating device has the advantage of uniformly affecting all areas of the substrates during educt injection, thereby improving the gloss of the plating and ensuring the uniformity of the plating in holes, compared to the conventional plating devices with plating tanks in which only partial areas of the substrates are affected during educt injection.

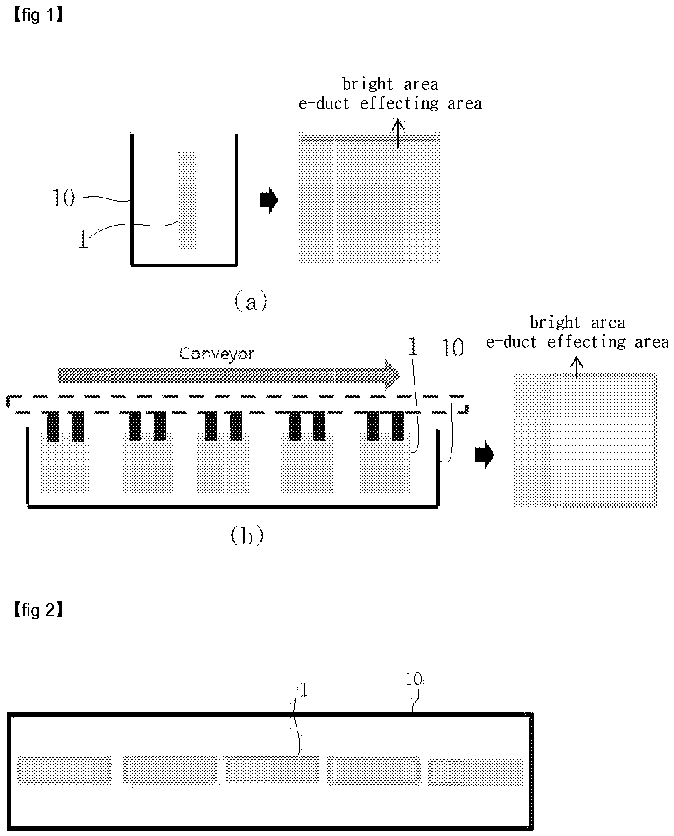

FIGS. 1(a) and 1(b) are schematic diagram illustrating a conventional plating device with a plating tank, a conventional vertical continuous plating device, and an educt affecting area (i.e., a bright area) after plating. FIG. 1(a) illustrates a state in which a substrate 1 is gripped in a plating tank 10 and bright areas appearing within the substrate 1 after plating in the conventional plating device. FIG. 1(b) illustrates a illustrates a state in which substrates 1 are gripped in the plating tank 10 and bright areas appearing within the substrate 1 after plating in the conventional vertical continuous plating device. As shown in FIGS. 1(a) and 1(b), the vertical continuous plating device has the advantage of uniformly affecting all areas of the substrates, thereby improving the brightness of the plating and ensuring the uniformity of the plating in holes, compared to the conventional plating devices with plating tanks.

However, as shown in FIG. 2, this conventional vertical continuous plating device entails problems in that since the linear arrangement of the substrates 1 within the plating tank 10 lead to an extended plating line compared to the conventional plating device with a plating tank, a considerable amount of space is required for substrate installation, resulting in significantly low space utilization, as well as the reduced number of the substrates that can be manufactured leads to a decrease in the manufacturing yield. In addition, the conventional vertical continuous plating device also entails a problem in that for multi-variety and small-batch production enterprises, the varied plating conditions for each product type makes it impossible to perform simultaneous plating processes, potentially causing delays in delivery dates.

Further, the conventional vertical continuous plating device has a significant disadvantage in terms of profitability due to the injection of a considerable amount of chemical agent for make-up. Additionally, in the case of the chemical agent for make-up, an additional make-up may be performed for only the amount of chemical agent consumed during the plating process but the chemical agent itself has an expiration date, which necessitates a periodic entire make-up process.

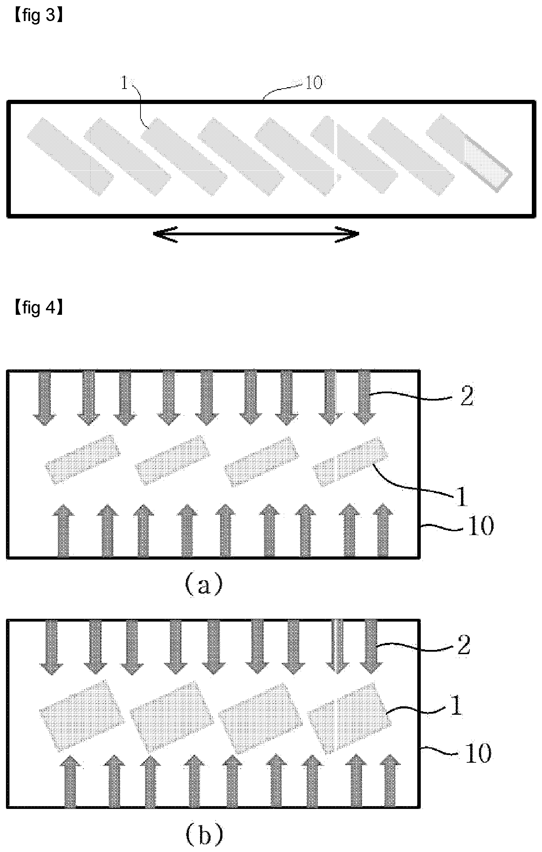

In this context, Korean Patent No. 10-2539090 (hereinafter referred to as 'Patent Document 1') discloses that substrates 1, to-be-plated objects 1 within a plating tank 10, are arranged in an oblique and angularly adjustable manner as shown in FIG. 3 to increase the workload of the to-be-plated objects within the plating tank 10 and maximize the educt effect so that the manufacturing yield can be increased and the quality can be improved. Moreover, Patent Document 1 also discloses that the to-be-plated objects are moved forward and backward in a gradually advancing manner to extend the overall movement distance so that the size of the plating tank can be reduced, which allows for the installation of multiple plating lines, thereby ensuring advantageous application in multi-variety and small-batch production processes.

However, the vertical continuous electroplating device according to Patent Document 1 has an educt effect higher than that of the aforementioned conventional plating device, but the to-be-plated objects are gradually moved only forward and backward along the longitudinal direction of the plating tank (see the arrow direction in FIG. 3), and thus in the case (a) of the to-be-plated objects having a smaller thickness, the separation distance between the to-be-plated objects and the eductors becomes greater than in the case (b) of the to-be-plated objects having a larger thickness as shown in FIG. 4, resulting in a relative decrease in the educt effect. For example, since the thickness of printed circuit boards (PCBs) varies from 0.4 to 8.5 mm or more for each product, a difference in plating quality may occur due to a variation in the thickness of the PCBs. In other words, since the PCBs are gradually moved only forward and backward along the longitudinal direction of the plating tank (see the arrow direction in FIG. 3) in a state where they are positioned at the central portion of the plating tank, the hole surface, which is the central portion of the PCB thickness, may receive the least educt effect. The central hole area, which is the most vulnerable portion of the PCB thickness in achieving the brightness of the plating and the uniformity of the hole plating, should receive more educt effect. However, a drawback arises in that this task cannot achieved with the current equipment.

### [Prior Art Literature]

### [Patent Documents]

Patent Document 1: Korean Patent No. 10-2539090 B1 (Issued on 02. 06. 2024)

### SUMMARY OF THE INVENTION

Accordingly, the present invention has been made to solve the aforementioned problems occurring in the prior art, and it is an object of the present invention to provide a vertical continuous plating device enabling to control plating deviation based on a thickness difference of to-be-plated objects, which allows to-be-plated objects to perform the horizontal forward/backward and left/right movement in a gradually advancing manner to extend the overall movement distance while controlling the educt effect based on the thickness of the to-be-plated objects through the arrangement angle adjustment and the horizontal left/right movement of the to-be-plated objects within a plating tank so that the educt effect for the to-be-plated objects within the plating tank can be maximized as well as the plating deviation can be reduced even for to-be-plated objects having different thicknesses to thereby improve the manufacturing yield and the quality and simultaneously increase space utilization compared to the same space due to a reduction in the size of the plating tank to enable the installation of multiple plating lines, thereby ensuring advantageous application in multi-variety and small-batch production and mass production.

To achieve the above object, the present invention provides a vertical continuous plating device enabling to control plating deviation based on a thickness difference of to-be-plated objects, wherein the vertical continuous plating device includes: a plating tank including eductors mounted on both left and right inner sidewalls thereof and configured to allow a plating solution to be filled and circulated therein, remove air adhered to the to-be-plated objects, and maximize plating in holes, wherein the to-be-plated objects are substrates; and a gripping and conveying unit mounted on a top portion of the plating tank in a vertically and horizontally movable manner and configured to perform a forward/backward, along the lengthwise direction of the plating tank, and left/right along the widthwise direction of the plating tank, reciprocating movement of the to-be-plated objects within the plating tank in a gradually advancing manner while vertically gripping the to-be-plated objects in a vertically movable or angularly variable manner on the top portion of the plating tank and electrically conducting the to-be-plated objects, so that the displacement and movement distance of the to-be-plated objects is controlled based on the thickness of the to-be-plated objects to control the plating deviation for each of the to-be-plated objects, wherein the gripping and conveying unit comprises: an angle changing and gripping unit configured to vertically grip the to-be-plated objects in an angularly variable manner on the top portion of the plating tank to enable angular adjustment of the top portions of the to-be-plated objects within an angular range from 0° to 90° relative to the lengthwise direction of the plating tank, and electrically conduct each of the to-be-plated objects; a conveying unit mounted on the top portion of the plating tank in a vertically and horizontally, forward/backward and left/right, movable manner in such a fashion as to be parallelly arranged in pair along the lengthwise direction of the plating tank to allow the changing and gripping unit to be supportedly mounted horizontally thereon so that the changing and gripping unit is moved in the vertically and horizontally, forward/backward and left/right, movable manner; and a movement distance control unit mounted at one side of the conveying unit and configured to control a horizontal forward/backward reciprocating movement of the conveying unit to adjust the movement distance of the to-be-plated objects within the plating tank. Accordingly, the arrangement angle and forward/backward and left/right movement of the to-be-plated objects within the plating tank can be controlled to control an educt effect for the to-be-plated objects so that uniform plating quality can be achieved even for to-be-plated objects having different thicknesses.

### Effects of the Invention

The vertical continuous plating device according to the present invention as constructed above has the following advantageous effects.

The arrangement angle and forward/backward and left/right displacement of the to-be-plated objects within the plating tank is controlled to control an educt effect for the to-be-plated objects having different thicknesses so that the educt effect for the to-be-plated objects within the plating tank can be controlled and plating deviation based on a thickness difference of the to-be-plated objects can be reduced, resulting in improvements in the manufacturing yield and the quality. In addition, reduction in the size of the plating tank is possible, resulting in an increase in space utilization compared to the same space to enable the installation of multiple plating lines, thereby ensuring advantageous application in multi-variety and small-batch production.

### BRIEF DESCRIPTION OF THE DRAWINGS

The above and other objects, features and advantages of the present invention will be apparent from the following detailed description of the preferred embodiments of the invention when taken in conjunction with the accompanying drawings, in which:
FIGS. 1(a) and 1(b) are schematic diagram illustrating a conventional plating device with a plating tank, a conventional vertical continuous plating device, and an educt affecting area (i.e., a bright area) after plating, respectively;
FIG. 2 is a schematic top plan view illustrating an arrangement state of substrates of the conventional vertical continuous plating device;
FIG. 3 is a schematic top plan view illustrating an arrangement state of substrates in a conventional vertical continuous plating device related to the present invention;
FIGS. 4(a) and 1(b) are reference diagrams illustrating a difference in the educt effect based on the thickness of substrates in a conventional vertical continuous plating device related to the present invention;
FIG. 5 is a schematic perspective view illustrating the main elements of a vertical continuous plating device enabling to control plating deviation based on a thickness difference of to-be-plated objects according to the present invention;
FIGS. 6(a) and 6(b) are conceptual views illustrating the displacement movement of a multi-armed clamp, which is performed in an angle changing and gripping unit of FIG. 5, and FIGS. 6(c) and 6(d) are schematic diagrams illustrating the coupling and separation between a mounting bar and a multi-armed clamp;
FIG. 7 is a reference diagram illustrating the forward/backward and left/right horizontal reciprocating movement of to-be-plated objects in a vertical continuous plating device enabling to control plating deviation based on a thickness difference of to-be-plated objects according to the present invention; and
FIGS. 8(a) and 8(b) are magnified cross-sectional photographs of an upper portion, an intermediate portion, and a lower portion of each of sample substrates 1 and 2 in Comparative Example and Example of the present invention.

**[Description of Reference Numerals]**

| | | | |
|---|---|---|---|
| 100: | plating tank | 101: | to-be-plated object |
| 2: | educt effect | 110: | eductor |
| 120: | phosphorus copper pocket | | |
| 200: | gripping and conveying unit | | |
| 210: | angle changing and gripping unit | | |
| 211: | mounting bar | | |
| 211a: | fastening hook | 211b: | vertical connecting rod |
| 211c: | fixing screw-fastening hole | | |
| 211d: | clamp rotation guide recess | | |
| 212: | multi-armed clamp | 212a: | clamp |
| 212b: | horizontal connecting rod | | |
| 212c: | fixing screw through-hole | | |
| 212d: | rotation support protrusion | 213: | fixing screw |
| 220: | conveying unit | | |
| 230: | movement distance control unit | | |
| M: | motor | R: | roller |
| 240: | plating deviation control unit | | |
| 241: | drive motor | | |
| 242: | speed reducer | 243: | rotary shaft |
| 243a: | rotary shaft-fixing member | 244: | cam |
| 245: | bracket | | |
| 246: | conveying unit-connecting rod | | |
| 246a: | slab | | |

### DETAILED DESCRIPTION OF THE PREFERRED EMBODIMENTS

Hereinafter, the configuration, operation and effect of a vertical continuous plating device enabling to control plating deviation based on a thickness difference of to-be-plated objects according to a preferred embodiment of the present invention will be described in detail with reference to the accompanying drawing.

The terms or words used in the specification and the claims of the present invention should not be construed as being typical or dictionary meanings, but should be construed as meanings and concepts conforming to the technical scope of the present invention on the basis of the principle that an inventor can properly define the concepts of the terms in order to describe his or her invention in the best way. Therefore, embodiments described herein and configurations illustrated in the drawings are merely the most preferred embodiments of the present invention. Thus, it should be understood that various equivalents or modifications which may replace the embodiments could exist at a time point of the application of the present invention.

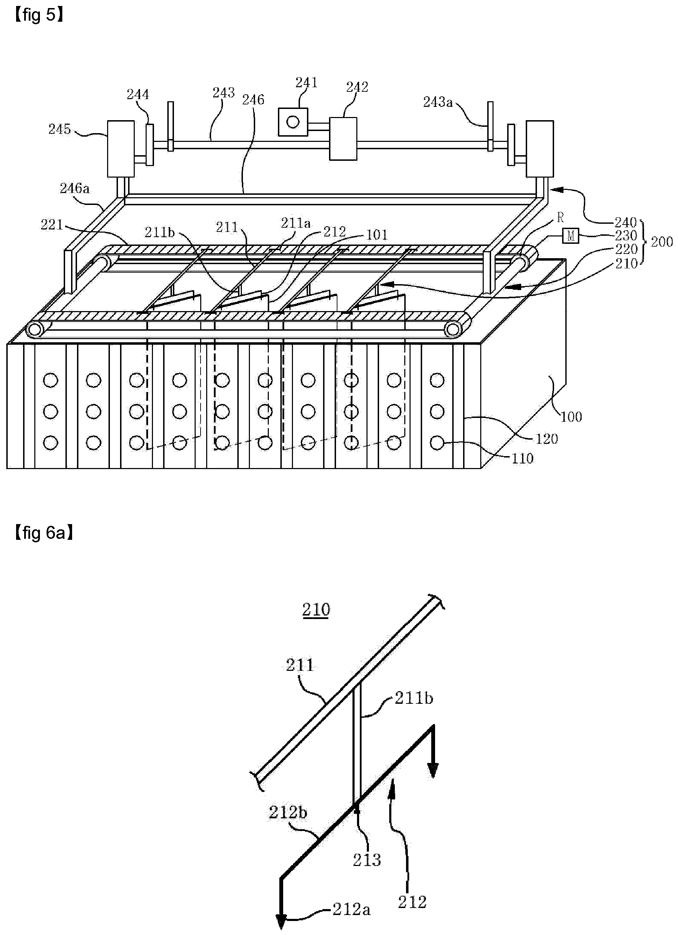

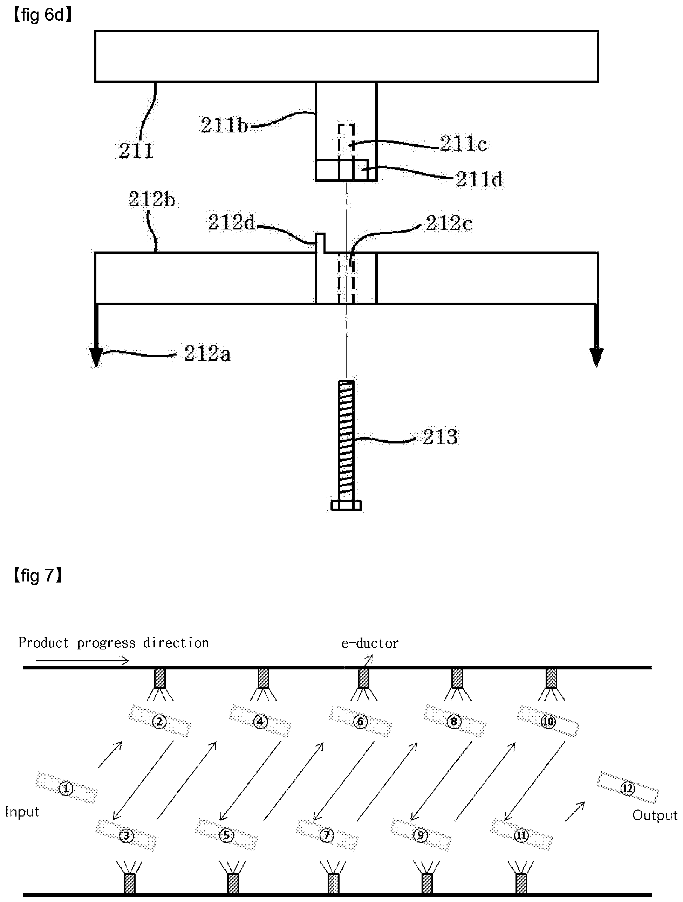

FIG. 5 is a schematic perspective view illustrating the main elements of a vertical continuous plating device enabling to control plating deviation based on a thickness difference of to-be-plated objects according to the present invention, FIGS. 6(a) to 6(d) are conceptual views and schematic diagram illustrating an angle variation ranging from 0° to 90° of a multi-armed clamp in an angle changing and gripping unit of FIG. 5 and the main elements of the angle changing and gripping unit, and FIG. 7 is a reference diagram illustrating the forward/backward and left/right horizontal reciprocating movement of to-be-plated objects in a vertical continuous plating device enabling to control plating deviation based on a thickness difference of to-be-plated objects according to the present invention.

As shown in the drawings, the vertical continuous plating device enabling to control plating deviation based on a thickness difference of to-be-plated objects includes a plating tank 100 and a gripping and conveying unit 200 so that the arrangement angle and the forward/backward and left/right reciprocating movement of the to-be-plated objects within the plating tank can be controlled to maximize the educt effect, resulting in a reduction in plating deviation based on the thickness difference of the to-be-plated objects. The vertical continuous plating device enabling to control plating deviation based on a thickness difference of to-be-plated objects according to the present invention may be implemented for use in a conveyor type panel plating device that grips and supports each to-be-plated object vertically on the top portion thereof while being hung on at least two points of the top portion thereof.

As shown in FIG. 5, the plating tank 100 is a tank that allows a plating solution to be filled therein, and includes eductors 110 mounted on both left and right inner sidewalls thereof to allow the plating solution to be circulated therein, remove air adhered to the to-be-plated objects, and maximize plating in holes. In addition, the plating tank 100 includes a phosphorus copper pocket 120 mounted therein to function as a copper plating source so that the plating is performed on the to-be-plated objects. This plating tank may be filled with a plating solution containing, for example, sulfuric acid, copper sulfate, chloride ions, a brightener, a wetting agent, or the like added thereto. In addition, an electrode for electrical conduction that can be used herein may include an anode made of phosphorus copper or an insoluble anode made of iridium.

The gripping and conveying unit 200 is mounted on a top portion of the plating tank 100 in a vertically and horizontally movable manner and is configured to perform a forward/backward and left/right reciprocating movement of the to-be-plated objects within the plating tank 100 in a gradually advancing manner while vertically gripping the to-be-plated objects in a vertically movable or angularly variable manner on the top portion of the plating tank 100 and electrically conducting the to-be-plated objects, so that the displacement and movement distance of the to-be-plated objects is controlled based on the thickness of the to-be-plated objects to control the plating deviation of the to-be-plated objects.

The gripping and conveying unit 200 may include an angle changing and gripping unit 210, a conveying unit 220, a movement distance control unit 230, and a plating deviation control unit 240.

The angle changing and gripping unit 210 serves to vertically grip each of the to-be-plated objects in an angularly variable manner on the top portion of the plating tank 100 and electrically conducting the each to-be-plated object. The angle changing and gripping unit 210 is mounted at both ends thereof on a pair of opposed conveyors of the conveying unit 220 so that it grips the top portions of the to-be-plated objects within the plating unit 220 so as to enable angular adjustment of the top portions of the to-be-plated objects within an angular range from 0° to 90° relative to the lengthwise direction of the plating tank 100. In addition, the angle changing and gripping unit 210 is moved forward/backward along the lengthwise direction of the plating tank 100 or left/right along the widthwise direction of the plating tank 100 together the conveyors so that the plating process is performed during the entire plating time. In this case, the current density during the electrical conduction may range from 0.1 to 5 A/dm², the forward/backward moving speed of the conveyors may range from 0 to 500 mm/min, the left/right moving speed of the conveyor may range from 0 to 250 mm/sec, and the entire plating time may range from 30 to 500 min. To this end, the angle changing and gripping unit 210 may include a mounting bar 211 that is mounted at both ends thereof on the pair of opposed conveyors, respectively, a multi-armed clamp 212 that grips each of the to-be-plated objects, and a fixing screw 213 that allows the mounting bar and the multi-armed clamp to be fixedly coupled to or rotatably separated from each other therethrough.

The mounting bar 211 includes a fastening hook 211a respectively formed at both ends thereof to allow the fastening hooks to be fixedly mounted on the conveying unit 220 in the widthwise (i.e., the transverse) direction of the plating tank 100 so as to provide the overall support for the loads of the multi-armed clamp and the to-be-plated object while reciprocating forward and backward along the lengthwise direction (i.e., the longitudinal direction) of the plating tank 100 by the conveyors of the conveying unit 220 as shown in FIG. 5. In addition, as shown in FIG. 6a to 6d, the mounting bar 211 includes a vertical connecting rod 211b of a certain length, which extends vertically downwardly from a gravity center portion thereof, and the vertical connecting rod 211b has a fixing screw-fastening hole 211c formed to a predetermined depth at a central portion of a bottom of a body thereof in such a manner as to extend vertically inwardly from the bottom of the body thereof to allow the fixing screw 213 to be coupled thereto. The vertical connecting rod 211b formed with the fixing screw-fastening hole 211c has a clamp rotation guide recess 211d formed at one side of the bottom of the body thereof in such a manner that a cross section of the body thereof is partially machined and removed in a semi-circular shape to guide a horizontal rotation movement of the multi-armed clamp. In this case, a threaded groove of a certain size is formed on the inner circumferential surface of the fixing screw-fastening hole 211c to allow the fixing screw to be assembled into the fixing screw-fastening hole 211c.

The multi-armed clamp 212 includes at least two or more clamps 212a mounted at both ends of a horizontal connecting rod 212b in such a manner as to be equidistantly spaced apart from each other and hung downwardly from the both ends thereof so that the top portion of each of the to-be-plate objects within the plating tank is fixedly gripped simultaneously by the clamps 212a at a plurality of points.

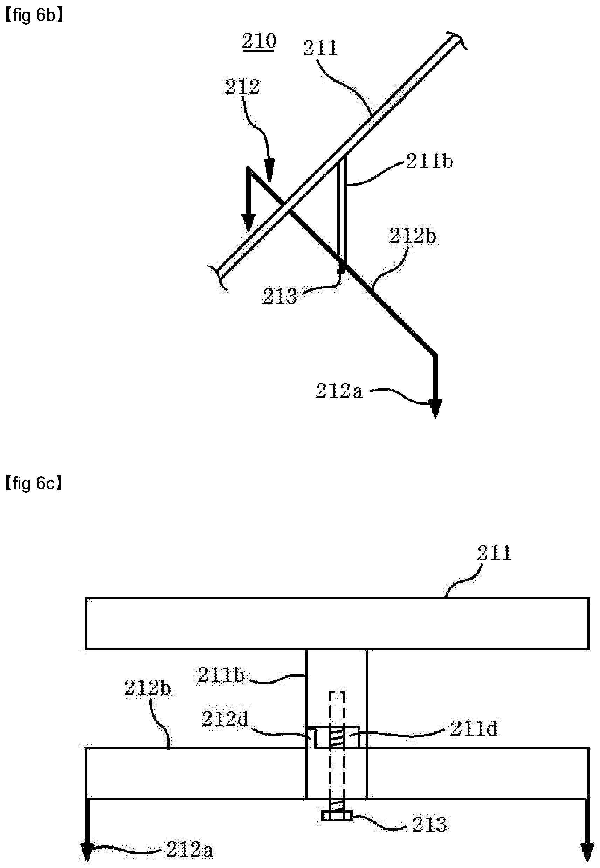

Further, as shown in FIGS. 6(c) and 6(d), the multi-armed clamp 212 is configured such that a fixing screw through-hole 212c is formed at a gravity center portion of the horizontal connecting rod 212b in such a manner as to vertically pass through the inside of a body of the horizontal connecting rod to allow the fixing screw 213 to be assembled thereinto. The horizontal connecting rod 212b formed with the fixing screw through-hole 212c has a rotation support protrusion 212d formed protrudingly upwardly from one side of a top of the central portion of a body thereof in such a manner as to have a fan shape to form its central angle of a predetermined angle (90°) so that the rotation support protrusion 212d can be guided and horizontally rotated in the clamp rotation guide recess 211d of the mounting bar 211. In this case, the fixing screw through-hole 212c has a threaded groove formed on the inner circumferential surface thereof to have the same inner diameter and size as the fixing screw-fastening hole 211c formed to a predetermine depth at the bottom of the vertical connecting rod 211b of the mounting bar 211.

The fixing screw 213 includes a threaded body of a length that can be assembled to the uppermost end portion of the fixing screw-fastening hole 211c of the mounting bar 211 through the height of the fixing screw through-hole 212c and the rotation support protrusion 212d of the multi-armed clamp 212 or the clamp rotation guide recess 211d. The fixing screw 213 includes a screw thread formed on the outer circumferential surface thereof to have an outer diameter allowing the fixing screw 213 to be screwably coupled to the fixing screw-fastening hole 211c of the mounting bar 211 and the fixing screw through-hole 212c of the multi-armed clamp 212 along the thread grooves of the fixing screw-fastening hole 211c and the fixing screw through-hole 212c so that the fixing screw 213 is assembled to or separated from the fixing screw-fastening hole 211c formed on the bottom of the vertical connecting rod 211b through the fixing screw through-hole 212c of the horizontal connecting rod 212b.

As such, the rotation support protrusion 212d formed on the top of the horizontal connecting rod 212b of the multi-armed clamp 212 is guided by the clamp rotation guide recess 211d formed on the bottom of the vertical connecting rod 211b of the mounting bar 211 so that the horizontal connecting rod 212b of the multi-armed clamp 212 can be engagingly coupled to or rotatably separated from the vertical connecting rod 211b of the mounting bar 211. When the fixing screw 213 is loosened, the multi-armed clamp 212 is allowed to be horizontally rotated from the mounting bar 211 within an angular range from 0° to 90° so that the displacement angle of the to-be-plated objects within the plating tank can be adjusted. In addition, the fixing screw 213 is fixedly re-assembled in a state where the multi-armed clamp 212 has been rotated to a desired angle to control the displacement angle of the to-be-plated objects, so that the arrangement angle of the to-be-plated objects within the plating tank can be secured. For example, the multi-armed clamp 212 may be adjusted in orientation by a desired angle within the range of the arrangement angle (0°: the angle where the to-be-plated object and the mounting bar are aligned in direction with each other) without any angular displacement of the to-be-plated objects within the plating tank as shown in FIG. 6(a). Alternatively, the multi-armed clamp 212 may be adjusted in orientation by a desired angle within the range of the arrangement angle (0° to 90°) (the angle where an angular displacement of +θ or -θ occurs, i.e., where the to-be-plated object and the mounting bar are inclined by +θ or -θ relative to each other) enabling an increase in the affected area due to the educt and improving plating quality as shown in FIG. 6(b).

The conveying unit (220) includes a conveyor mounted on the top portion of the plating tank (100) in a vertically and horizontally (forward/backward: the lengthwise direction of the plating tank; and left/right: the widthwise direction of the plating tank) movable manner, and the conveyor may be arranged along the lengthwise direction of the plating tank (for example, the conveyor is parallelly arranged in pair) to allow the changing and gripping unit 210 to be supportedly mounted horizontally thereon so that the angle changing and gripping unit 210 is moved vertically or horizontally (forward/backward and left/right) in a gradually advancing manner on the top portion of the plating tank by power sources such as a motor and a speed reducer. In this case, the forward/backward moving speed of the conveying unit may range from 0 to 500 mm/min, and the left/right moving speed of the conveying unit may range from 0 to 250 mm/sec.

The movement distance control unit 230 is mounted at one side of the conveying unit 220 and controls a horizontal forward/backward (the lengthwise direction of the plating tank) reciprocating movement of the conveying unit 220 to adjust the movement distance of the to-be-plated objects within the plating tank. The movement distance control unit 230 may include a typical motor (M) that is forward and reverse rotatable and a plurality of typical roller(R) that is rotated by the motor to move the conveying unit 220 forwardly in one direction or backwardly in the opposite direction thereto. In addition, the movement distance control unit 230 operates the conveying unit 220 to move reciprocatingly forward and backward in the lengthwise direction of the plating tank 100 in a gradually advancing manner at each operating cycle during the entire plating time using the power of the motor to thereby extend the overall movement distance of the to-be-plated objects gripped and positioned by the angle changing and gripping unit 210 within the plating tank. In this case, the entire plating time may be 30 to 500 min.

The movement distance control unit 230 may rotate the motor forward during the initial first half of each operating cycle of the entire plating time, which is set to drive the conveying unit to allow the conveying unit 220 to be forwardly moved to a first position, and may repeatedly perform, at each operating cycle, an operation in which the motor is caused to rotate reverse during the next second half thereof to allow the conveying unit 220 to be moved backward to a second position shorter than the first position upon the control of the horizontal forward/backward reciprocating movement of the conveyor 220 to thereby extend the overall movement distance of the to-be-plated objects gripped and positioned by the angle changing and gripping unit 210 within the plating tank during the entire plating time. For example, in the operating cycle during which the conveying unit is moved by 10 cm every 20 seconds, the conveying unit is moved forward by 30 cm during the first 10 seconds, and the conveying unit is moved backward by 20 cm during the next 10 seconds. This operation is performed repeatedly, which allows the to-be-plated objects to move forward and backward in a gradually advancing manner during the entire plating time, thereby extending the overall movement distance of the to-be-plated objects within the plating tank.

By virtue of the above described configuration, for example, when plating substrates having a width of 30.5 cm are arranged at intervals of 10 cm on a plating tank having a total length of 1800 cm, the number of plating substrates that can be received in a conventional vertical continuous plating device is approximately 44. However, in the case of the vertical continuous plating device according to the present invention, which enables the control of the arrangement angle and movement distance of the to-be-plated objects, the number of plating substrates that can be received in the inventive vertical continuous plating device is approximately 177, resulting in an increase in the manufacturing yield relative to the same space.

Further, when 44 plating substrates are plated using the inventive vertical continuous plating device, the overall length of the plating tank may be reduced to about 500 cm to enable the installation of additional plating lines, thereby increasing space utilization.

The plating deviation control unit 240 is mounted at one side of an upper portion of the conveying unit 220 and controls the drive of the eductors of the plating tank 100 and a horizontal left/right (the widthwise direction of the plating tank) reciprocating movement of the conveying unit 220 based on the thickness of the to-be-plated objects so that the positions of the to-be-plated object within the plating tank are evenly changed sequentially as shown in FIG. 7 to adjust the separation distance between the eductors mounted on both left and right inner sidewalls of the plating tank and the to-be-plated objects within the plating tank to control the educt effect 2 and thus to control the plating deviation based on a thickness difference of the to-be-plated objects within the plating tank. To this end, the plating deviation control unit 240 may include a drive motor 241, a speed reducer 242, a rotary shaft 243, a pair of opposed cams 244, a pair of opposed brackets 245, and a conveying unit-connecting rod 246.

The drive motor 241 and the speed reducer 242 are used as a power source of the plating deviation control unit and is used to reduce the rotational speed of the motor, respectively.

The rotary shaft 243 is mounted at one side of the upper portion of the conveying unit 220 to have a length corresponding to the longitudinal length of the plating tank 100, and is rotatably supported and fixed by a pair of opposed separate rotary shaft-fixing members 243a that are arranged to be spaced apart from each other by a predetermined distance by a pair of opposed separate supports mounted on a ceiling or a ground surface so as to be rotated by the drive motor 241 and the speed reducer 242.

The cams 244 are mounted at both ends of the rotary shaft 243 so as to be integrally rotated along with the rotary shaft.

The brackets 245 are connected to the rear sides of the respective cams 244 to convert rotational motion into linear motion of the cams while supporting the cams.

The conveying unit-connecting rod 246 is formed to have a length corresponding to the longitudinal length of the plating tank 100, is directly connected at both ends thereof to the respective brackets 245 to synchronize the linear motions of the both brackets 245 by the respective cams 244, and is mounted at one side of the upper portion of the conveying unit 220 in parallel with the rotary shaft 243 in such as manner as to be directly connected to the conveying unit 220 through at least one slab 246a so that the conveying unit-connecting rod 246 reciprocates horizontally in the left and right directions of the plating tank along with the conveying unit 220 due to the linear motion of the brackets 245. The horizontal left/right moving speed of the conveying unit-connecting rod may range from 0 to 250 mm/sec.

The plating deviation control unit 240 as constructed above may control the drive speed of the drive motor 241 based on the thickness of the to-be-plated objects gripped by the angle changing and gripping unit 210 and the horizontal left/right reciprocating movement of the conveying unit 220 to control the plating deviation of the to-be-plated objects within the plating tank.

In addition, the plating deviation control unit 240 as constructed above may control may control the drive of the eductors of the plating tank 100 and the horizontal left/right reciprocating movement of the conveying unit 220 based on the aspect ratio of the to-be-plated objects gripped by the angle changing and gripping unit 210 to control the plating deviation of the to-be-plated objects within the plating tank. In this case, for example, if the aspect ratio of the to-be-plated objects gripped by the angle changing and gripping unit 210 is 10:1 or less, the plating deviation control unit 240 stops the drive of the eductors of the plating tank 100 and controls only the horizontal left/right reciprocating movement of the conveying unit 220 to control the plating deviation of the to-be-plated objects within the plating tank.

Hereinafter, the present invention will be described with reference to Comparative Example and Example. It will be obvious to a person having ordinary skill in the art that these examples are for illustrative purposes only and are not to be construed to limit the scope of the present invention. Thus, the substantial scope of the present invention will be defined by the appended claims and equivalents thereof.

Comparative Example and Example: Manufacture of plating layer according to presence or absence of left/right movement of to-be-plated objects

(a1) Plating tanks A and B were prepared, and 120 g/L of sulfuric acid, 60 g/L of copper sulfate, 45 ppm of chloride ions, 2 ml/L of a brightener, and 20 ml/L of a wetting agent were commonly introduced thereto, respectively. Then, plating solutions having the same component contents and conditions were formed commonly, and for each of the plating tanks A and B, the plating conditions were commonly set to a bath temperature of 2°C, a current density of 0.7 A/dm², an anode made of phosphorus copper.

(a2) Substrates 1 and 2 were prepared to have a thickness of 6.3 mm and plating holes measuring 150 µm (aspect ratio of 42:1), formed through a drilling process.

(a3) Each of the substrates 1 and 2 was put into each of the plating tanks A and B and eductors in each plating tank were driven under the same conditions (vibrational frequency of eductors is 60 Hz). Thereafter, a plating operation was performed for 120 minutes. In the plating process, substrate 1 was reciprocated forward and backward at a speed of 50 mm/min along the lengthwise direction of plating tank A, while substrate 2 was reciprocated forward and backward at a speed of 50 mm/min along the lengthwise direction of plating tank B. Additionally, substrate 2 was reciprocated left and right at a speed of 20 mm/min along the widthwise direction of the plating tank B. Consequently, sample substrate 1 (where substrate 1 was moved forward and backward along the lengthwise direction of plating tank A) and sample substrate 2 (where substrate 2 moved left and right along the widthwise direction of plating tank B while also moving forward and backward along the lengthwise direction of plating tank B) each having a plating layer formed thereon were manufactured. Subsequently, the cross sections of the plating layers of the sample substrates 1 and 2 were magnified and photographed using a microscope, respectively.

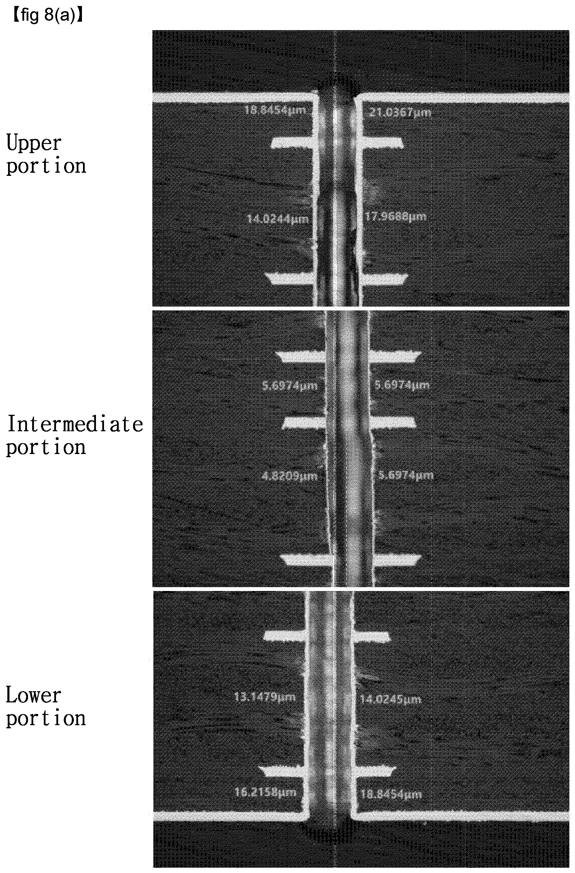

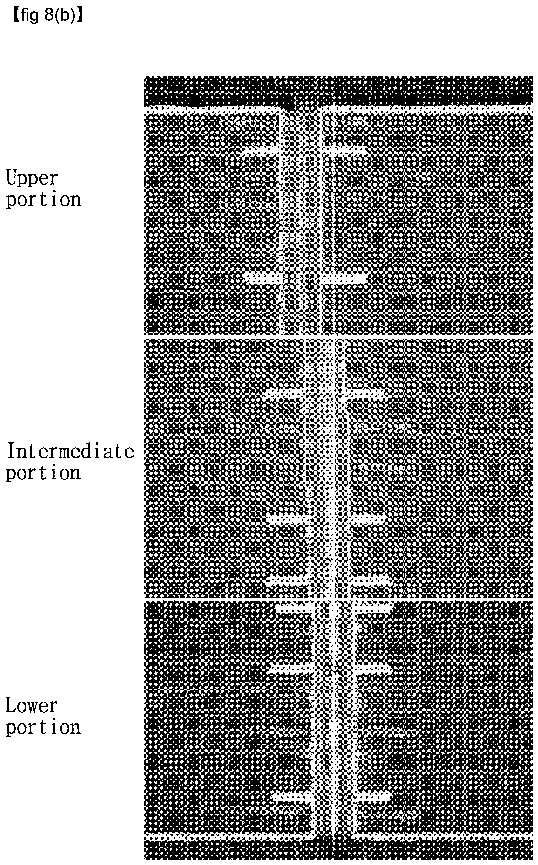

FIGS. 8(a) and 8(b) are magnified cross-sectional photographs of an upper portion, an intermediate portion, and a lower portion of each of sample substrates 1 and 2. It can be observed from FIGS. 8(a) and 8(b) that in the case Example illustrated in FIG. 8(b) (where substrate 2 was reciprocated left and right along the widthwise direction of plating tank B while being reciprocated forward and backward along the lengthwise direction of plating tank B to form a plating layer), controlling the influence of the eductors is much more effective than in the case of Comparative Example illustrated in FIG. 8(a) (where substrate 1 was reciprocated forward and backward along the lengthwise direction of plating tank A by applying the inventive vertical continuous plating device to form a plating layer), thereby ensuring uniformity of thickness of the plating layers not only at the upper and lower portions but also at the intermediate portion of the inside of the hole.

The vertical continuous plating device enabling to control plating deviation based on a thickness difference of to-be-plated objects according to the present invention may be implemented for use in a conveyor type panel plating device that grips and supports the to-be-plated objects within the plating tank vertically on the top portion thereof while being hung on at least two points of the top portion thereof.

The vertical continuous plating device of the present invention can complement the issues of surface plating uniformity and hole plating uniformity on the conventional plating device through the added oscillation function. Moreover, while conventional plating devices only have linearity due to the forward/backward reciprocating movement of the conveyor, the vertical continuous plating device of the present invention can repeat straight forward and backward movements over a certain distance to minimize the size of the plating device, adjust the amount of chemical agent for make-up, enable the implementation of an environmentally friendly device so as to perform uniform plating. Furthermore, the vertical continuous plating device of the present invention can apply variation in angle to the to-be-plated objects during the plating process to allow the plating panel to be mounted on the conveyor plating device, leading to an increase in plating productivity through dense arrangement.

As described above, according to the present invention, the to-be-plated objects within the plating tank can be arranged in an oblique and angularly adjustable manner the educt effect can be controlled based on the thickness of the to-be-plated objects through the left/right horizontal movement of the to-be-plated objects within the plating tank. Besides, the to-be-plated objects within the plating tank can be moved left/right in a gradually advancing manner to extend the overall movement distance thereof, thereby maximizing the educt effect for the to-be-plated objects within the plating tank and thus improving the manufacturing yield and the quality.

Moreover, the vertical continuous plating device according to the present invention cam increase space utilization compared to the same space due to a reduction in the size of the plating tank to enable the installation of multiple plating lines, thereby ensuring advantageous application in multi-variety and small-batch production.

While the present invention has been described in connection with the exemplary embodiments illustrated in the drawings, they are merely illustrative and the invention is not limited to these embodiments. It will be appreciated by a person having an ordinary skill in the art that various equivalent modifications and variations of the embodiments can be made without departing from the scope of the present invention. Therefore, the scope of the present invention should be understood only by the claims set forth below.

## Claims

1. A vertical continuous plating device enabling to control plating deviation based on a thickness difference of to-be-plated objects (101), wherein the plating device comprises:
a plating tank (100) comprising eductors (110) mounted on both left and right inner sidewalls thereof and configured to allow a plating solution to be filled and circulated therein, remove air adhered to the to-be-plated objects (101), and maximize plating in holes wherein the to-be plated objects (101) are substrates; and
a gripping and conveying unit (200) mounted on a top portion of the plating tank (100) in a vertically and horizontally movable manner and configured to perform a forward/backward, along the lengthwise direction of the plating tank (100), and left/right, along the widthwise direction of the plating tank (100), reciprocating movement of the to-be-plated objects within the plating tank (100) in a gradually advancing manner while vertically gripping the to-be-plated objects (101) in a vertically movable or angularly variable manner on the top portion of the plating tank (100) and electrically conducting the to-be-plated objects (101), so that the displacement and movement distance of the to-be-plated objects (101) is controlled based on the thickness of the to-be-plated objects to control the plating deviation for each of the to-be-plated objects (101),
wherein the gripping and conveying unit (200) comprises:
an angle changing and gripping unit (210) configured to vertically grip the to-be-plated objects (101) in an angularly variable manner on the top portion of the plating tank (100) to enable angular adjustment of the top portions of the to-be-plated objects within an angular range from 0° to 90° relative to the lengthwise direction of the plating tank (100), and electrically conduct each of the to-be-plated objects (101);
a conveying unit (220) mounted on the top portion of the plating tank (100) in a vertically and horizontally, forward/backward and left/right, movable manner in such a fashion as to be parallelly arranged in pair along the lengthwise direction of the plating tank (100) to allow the changing and gripping unit (210) to be supportedly mounted horizontally thereon so that the changing and gripping unit (210) is moved in the vertically and horizontally, forward/backward and left/right, movable manner; and
a movement distance control unit (230) mounted at one side of the conveying unit (220) and configured to control a horizontal forward/backward reciprocating movement of the conveying unit (220) to adjust the movement distance of the to-be-plated objects (101) within the plating tank (100).

2. The vertical continuous plating device according to claim 1, wherein the gripping and conveying unit (200) further comprises:
a plating deviation control unit (240) mounted at one side of an upper portion of the conveying unit (220) and configured to control the drive of the eductors of the plating tank (100) and a horizontal left/right reciprocating movement of the conveying unit (220) based on the thickness of the to-be-plated objects (101) to control the plating deviation based on a thickness difference of the to-be-plated objects (101) within the plating tank (100).

3. The vertical continuous plating device according to claim 2, wherein the angle changing and gripping unit (210) comprises:
a mounting bar (211) comprising a fastening hook (211a) respectively formed at both ends thereof to allow the fastening hooks (211a) to be fixedly mounted on the conveying unit (220) in the widthwise direction of the plating tank (100) so as to support a load of the to-be-plated object (101) while reciprocating forward and backward along the lengthwise direction of the plating tank (100) by the conveying unit (220);
a multi-armed clamp (212) comprising at least two or more clamps (212a) mounted in such a manner as to be hung downwardly to grip the to-be-plate objects (101) so that the top portion of each of the to-be-plate objects (101) within the plating tank (100) is fixedly gripped simultaneously by the clamps (212a) at a plurality of points; and
a fixing screw (213) configured to allow a lower portion of the mounting bar (211) and the multi-armed clamp (212) to be fixedly coupled to or rotatably separated from each other therethrough.

4. The vertical continuous plating device according to claim 3, wherein the mounting bar (211) comprises a vertical connecting rod (211b) of a certain length, which extends vertically downwardly from a gravity center portion thereof, the vertical connecting rod (211b) having a fixing screw-fastening hole (211c) formed at a central portion of a bottom of a body thereof in such a manner as to extend vertically inwardly from the bottom of the body thereof to allow the fixing screw (213) to be coupled thereto, and
wherein the vertical connecting rod (211b) formed with the fixing screw-fastening hole (211c) has a clamp rotation guide recess (211d) formed at one side of the bottom of the body thereof in such a manner that a cross section of the body thereof is partially machined and removed in a semi-circular shape to guide a horizontal rotation movement of the multi-armed clamp (212).

5. The vertical continuous plating device according to claim 3, wherein the multi-armed clamp (212) comprises a plurality of clamps (212a) mounted at both ends of a horizontal connecting rod (212b) in such a manner as to be supported by the horizontal connecting rod (212b) and equidistantly spaced apart from each other,
wherein the multi-armed clamp (212) is configured such that a fixing screw through-hole (212c) is formed at a gravity center portion of the horizontal connecting rod (212b) in such a manner as to vertically pass through the inside of a body of the horizontal connecting rod to allow the fixing screw (213) to be assembled thereinto; and
wherein the horizontal connecting rod (212b) formed with the fixing screw through-hole (212c) has a rotation support protrusion (212d) formed protrudingly upwardly from one side of a top of the central portion of a body thereof in such a manner as to have a fan shape to form its central angle of a predetermined angle (90°) so that the rotation support protrusion (212d) can be guided and horizontally rotated in the clamp rotation guide recess (211d) of the mounting bar (211).

6. The vertical continuous plating device according to claim 5, wherein the fixing screw (213) comprises a threaded body of a length that can be assembled to the uppermost end portion of the fixing screw-fastening hole (211c) of the mounting bar (211) through the height of the fixing screw through-hole (212c) and the rotation support protrusion (212d) of the multi-armed clamp (212) or the clamp rotation guide recess (211d).

7. The vertical continuous plating device according to claim 6, wherein the fixing screw (213) comprises a screw thread formed on the outer circumferential surface thereof to have an outer diameter allowing the fixing screw (213) to be screwably coupled to the fixing screw-fastening hole (211c) of the mounting bar 211 and the fixing screw through-hole (212c) of the multi-armed clamp (212) along the thread grooves of the fixing screw-fastening hole (211c) and the fixing screw through-hole (212c) so that the fixing screw (213) is assembled to or separated from the fixing screw-fastening hole (211c) formed on the bottom of the vertical connecting rod (211b) through the fixing screw through-hole (212c) of the horizontal connecting rod (212b).

8. The vertical continuous plating device according to claim 2, wherein the movement distance control unit (230) operates the motor to rotate forward during the initial first half of each operating cycle of the entire plating time to allow the conveying unit (220) to be forwardly moved to a first position, and repeatedly performs, at each operating cycle, an operation in which the motor is caused to rotate reverse during the next second half thereof to allow the conveying unit (220) to be moved backward to a second position shorter than the first position upon the control of the horizontal forward/backward reciprocating movement of the conveyor (220) to thereby extend the overall movement distance of the to-be-plated objects (101) gripped and positioned by the angle changing and gripping unit (210) within the plating tank (100) during the entire plating time.

9. The vertical continuous plating device according to claim 2, wherein the plating deviation control unit (240) comprises:
a drive motor (241) configured to serve as a power source and a speed reducer (242) configured to reduce the rotational speed of the motor;
a rotary shaft (243) mounted at one side of the upper portion of the conveying unit (220) to have a length corresponding to the longitudinal length of the plating tank (100), and configured to be rotatably supported and fixed by a pair of opposed separate rotary shaft-fixing members (243a) that are arranged to be spaced apart from each other so as to be rotated by the drive motor (241) and the speed reducer (242);
a pair of opposed cams (244) mounted at both ends of the rotary shaft (243) so as to be integrally rotated together with the rotary shaft (243);
a pair of opposed brackets (245) connected to the rear sides of the respective cams (244) to convert rotational motion into linear motion of the cams (244) while supporting the cams (244); and
a conveying unit-connecting rod (246) formed to have a length corresponding to the longitudinal length of the plating tank (100), the conveying unit-connecting rod (246) being directly connected at both ends thereof to the respective brackets (245) to synchronize the linear motions of the both brackets (245) by the respective cams (244) and being mounted at one side of the upper portion of the conveying unit (220) in parallel with the rotary shaft (243) in such as manner as to be directly connected to the conveying unit (220) through at least one slab (246a) so that the conveying unit-connecting rod (246) reciprocates horizontally in the left and right directions of the plating tank along together with the conveying unit (220) due to the linear motion of the brackets (245).

10. The vertical continuous plating device according to claim 9, wherein the plating deviation control unit (240) controls the drive speed of the drive motor (241) based on the thickness of the to-be-plated objects gripped by the angle changing and gripping unit (210) and the horizontal left/right reciprocating movement of the conveying unit (220) to control the plating deviation of the to-be-plated objects (101) within the plating tank (100).

11. The vertical continuous plating device according to claim 9, wherein the plating deviation control unit (240) controls the drive of the eductors of the plating tank (100) and the horizontal left/right reciprocating movement of the conveying unit (220) based on the aspect ratio of the to-be-plated objects (101) gripped by the angle changing and gripping unit (210) to control the plating deviation of the to-be-plated objects (101) within the plating tank (100).

12. The vertical continuous plating device according to claim 11, wherein if the aspect ratio of the to-be-plated objects (101) gripped by the angle changing and gripping unit (210) is 10:1 or less, the plating deviation control unit (240) stops the drive of the eductors (110) of the plating tank (100) and controls only the horizontal left/right reciprocating movement of the conveying unit (220) to control the plating deviation of the to-be-plated objects (101) within the plating tank (100).

## Patentansprüche

1. Vertikale kontinuierliche Plattierungsvorrichtung, die es ermöglicht, eine Plattierungsabweichung basierend auf einem Dickenunterschied der zu plattierenden Objekte (101) zu steuern, wobei die Plattierungsvorrichtung umfasst:
einen Plattierungsbehälter (100), der Ejektoren (110) umfasst, die sowohl an seiner linken als auch seiner rechten inneren Seitenwand angebracht sind und dazu konfiguriert sind, es zu erlauben, dass eine Plattierungslösung damit befüllt wird und darin zirkuliert, an den zu plattierenden Objekten (101) haftende Luft zu entfernen und eine Plattierung in Löchern zu maximieren, wobei die zu plattierenden Objekte (101) Substrate sind; und
eine Greif- und Fördereinheit (200), die an einem oberen Abschnitt des Plattierungsbehälters (100) auf vertikal und horizontal bewegliche Weise angebracht ist und dazu konfiguriert ist, eine Hin-und Herbewegung vorwärts-/rückwärts entlang der Längsrichtung des Plattierungsbehälters (100) und links-/rechts entlang der Breitenrichtung des Plattierungsbehälters (100) der zu plattierenden Objekte innerhalb des Plattierungsbehälters (100) in einer graduell voranschreitenden Weise durchzuführen, während sie die zu plattierenden Objekte (101) in vertikal beweglicher oder winkelvariabler Weise an dem oberen Abschnitt des Plattierungsbehälters (100) vertikal greift und die zu plattierenden Objekte (101) elektrisch leitet, so dass die Verschiebung und die Bewegungsdistanz der zu plattierenden Objekte (101) basierend auf der Dicke der zu plattierenden Objekte gesteuert wird, um die Plattierungsabweichung für jedes der zu plattierenden Objekte (101) zu steuern,
wobei die Greif- und Fördereinheit (200) umfasst:
eine Winkeländerungs- und Greifeinheit (210), die dazu konfiguriert ist, die zu plattierenden Objekte (101) auf winkelvariable Weise vertikal an dem oberen Abschnitt des Plattierungsbehälters (100) zu greifen, um eine Winkeleinstellung der oberen Abschnitte der zu plattierenden Objekte innerhalb eines Winkelbereichs von 0° bis 90° relativ zur Längsrichtung des Plattierungsbehälters (100) zu ermöglichen, und jedes der zu plattierenden Objekte (101) elektrisch zu leiten;
eine Fördereinheit (220), die an dem oberen Abschnitt des Plattierungsbehälters (100) auf eine vertikal und horizontal, vorwärts/rückwärts und links/rechts bewegbare Weise angebracht ist, in einer Art, dass sie parallel paarweise entlang der Längsrichtung des Plattierungsbehälters (100) angeordnet ist, um es zu erlauben, dass die Wechsel- und Greifeinheit (210) horizontal darauf stützend angebracht ist, so dass die Wechsel- und Greifeinheit (210) auf die vertikal und horizontal, vorwärts/rückwärts und links/rechts bewegbare Weise bewegt wird; und
eine Bewegungsdistanz-Steuereinheit (230), die an einer Seite der Fördereinheit (220) angebracht ist und dazu konfiguriert ist, eine horizontale Vorwärts-/Rückwärts-Hin-und Herbewegung der Fördereinheit (220) zu steuern, um die Bewegungsdistanz der zu plattierenden Objekte (101) innerhalb des Plattierungsbehälters (100) einzustellen.

2. Vertikale kontinuierliche Plattierungsvorrichtung nach Anspruch 1, wobei die Greif- und Fördereinheit (200) ferner umfasst:
eine Plattierungsabweichungs-Steuereinheit (240), die an einer Seite eines oberen Abschnitts der Fördereinheit (220) angebracht ist und dazu konfiguriert ist, den Antrieb der Ejektoren des Plattierungsbehälters (100) und eine horizontale Links/Rechts-Hin- und Herbewegung der Fördereinheit (220) basierend auf der Dicke der zu plattierenden Objekte (101) zu steuern, um die Plattierungsabweichung basierend auf einem Dickenunterschied der zu plattierenden Objekte (101) innerhalb des Plattierungsbehälters (100) zu steuern.

3. Vertikale kontinuierliche Plattierungsvorrichtung nach Anspruch 2, wobei die Winkeländerungs- und Greifeinheit (210) umfasst:
eine Montagestange (211), die einen Befestigungshaken (211a) umfasst, der jeweils an ihren beiden Enden gebildet ist, um es zu erlauben, dass die Befestigungshaken (211a) an der Fördereinheit (220) in der Breitenrichtung des Plattierungsbehälters (100) fest montiert sind, um eine Last des zu plattierenden Objekts (101) zu tragen, während sie von der Fördereinheit (220) entlang der Längsrichtung des Plattierungsbehälters (100) vorwärts und rückwärts hin und her bewegt werden;
eine mehrarmige Klemme (212), die wenigstens zwei oder mehr Klemmen (212a) umfasst, die derart angebracht sind, dass sie nach unten hängen, um die zu plattierenden Objekte (101) so zu greifen, dass der obere Abschnitt jedes der zu plattierenden Objekte (101) innerhalb des Plattierungsbehälters (100) gleichzeitig an einer Vielzahl von Punkten fest von den Klemmen (212a) gegriffen wird; und
eine Fixierungsschraube (213), die dazu konfiguriert ist, es zu erlauben, dass ein unterer Abschnitt der Montagestange (211) und die mehrarmige Klemme (212) dadurch fest miteinander gekoppelt oder drehbar voneinander getrennt werden.

4. Vertikale kontinuierliche Plattierungsvorrichtung nach Anspruch 3, wobei die Montagestange (211) eine vertikale Verbindungsstange (211b) einer bestimmten Länge umfasst, die sich von einem Schwerpunktabschnitt derselben vertikal nach unten erstreckt, wobei die vertikale Verbindungsstange (211b) ein Fixierungsschrauben-Befestigungsloch (211c) aufweist, das in einem mittleren Abschnitt eines Bodens eines Körpers derselben derart gebildet ist, dass es sich vertikal nach innen vom Boden des Körpers derselben erstreckt, um es zu erlauben, dass die Fixierungsschraube (213) damit gekoppelt ist, und
wobei die vertikale Verbindungsstange (211b), die mit dem Fixierungsschrauben-Befestigungsloch (211c) gebildet ist, eine Klemmendrehungsführungsausnehmung (211d) aufweist, die an einer Seite des Bodens ihres Körpers derart gebildet ist, dass ein Querschnitt ihres Körpers teilweise spanend bearbeitet und in einer halbkreisförmigen Form entfernt ist, um eine horizontale Drehbewegung der mehrarmigen Klemme (212) zu führen.

5. Vertikale kontinuierliche Plattierungsvorrichtung nach Anspruch 3, wobei die mehrarmige Klemme (212) eine Vielzahl von Klemmen (212a) umfasst, die an beiden Enden einer horizontalen Verbindungsstange (212b) derart angebracht sind, dass sie von der horizontalen Verbindungsstange (212b) gestützt werden und in gleichem Abstand voneinander angeordnet sind,
wobei die mehrarmige Klemme (212) so konfiguriert ist, dass ein Fixierungsschrauben-Durchgangsloch (212c) an einem Schwerpunktabschnitt der horizontalen Verbindungsstange (212b) derart gebildet ist, dass es vertikal durch das Innere eines Körpers der horizontalen Verbindungsstange verläuft, um es zu erlauben, dass die Fixierungsschraube (213) darin angebracht ist; und
wobei die horizontale Verbindungsstange (212b), die mit dem Fixierungsschrauben-Durchgangsloch (212c) gebildet ist, einen Drehstützvorsprung (212d) aufweist, der von einer Seite einer Oberseite des Mittelabschnitts ihres Körpers derart nach oben vorstehend gebildet ist, dass er eine Fächerform aufweist, um seinen Mittelwinkel mit einem vorbestimmten Winkel (90°) zu bilden, so dass der Drehstützvorsprung (212d) in der Klemmendrehungsführungsausnehmung (211d) der Montagestange (211) geführt und horizontal gedreht werden kann.

6. Vertikale kontinuierliche Plattierungsvorrichtung nach Anspruch 5, wobei die Fixierungsschraube (213) einen Gewindekörper umfasst, der eine Länge aufweist, die so bemessen ist, dass sie am obersten Endabschnitt des Fixierungsschrauben-Befestigungslochs (211c) der Montagestange (211) durch die Höhe des Fixierungsschrauben-Durchgangslochs (212c) und den Drehstützvorsprung (212d) der mehrarmigen Klemme (212) oder die Klemmendrehungsführungsausnehmung (211d) angebracht werden kann.

7. Vertikale kontinuierliche Plattierungsvorrichtung nach Anspruch 6, wobei die Fixierungsschraube (213) ein Schraubengewinde umfasst, das an ihrer Außenumfangsoberfläche gebildet ist, um einen Außendurchmesser zu haben, der es erlaubt, dass die Fixierungsschraube (213) mit dem Fixierungsschrauben-Befestigungsloch (211c) der Montagestange (211) und dem Fixierungsschrauben-Durchgangsloch (212c) der mehrarmigen Klemme (212) entlang der Gewindenuten des Fixierungsschrauben-Befestigungslochs (211c) und des Fixierungsschrauben-Durchgangslochs (212c) verschraubbar gekoppelt ist, so dass die Fixierungsschraube (213) in dem Fixierungsschrauben-Befestigungsloch (211c), das an der Unterseite der vertikalen Verbindungsstange (211b) gebildet ist, durch das Fixierungsschrauben-Durchgangsloch (212c) der horizontalen Verbindungsstange (212b) angebracht oder von diesem getrennt ist.

8. Vertikale kontinuierliche Plattierungsvorrichtung nach Anspruch 2, wobei die Bewegungsdistanz-Steuereinheit (230) den Motor so betreibt, dass er sich während der anfänglichen ersten Hälfte jedes Betriebszyklus der gesamten Plattierungszeit vorwärts dreht, um es der Fördereinheit (220) zu erlauben, vorwärts in eine erste Position bewegt zu werden, und bei jedem Betriebszyklus wiederholt einen Vorgang ausführt, bei dem der Motor veranlasst wird, während der nächsten, zweiten Hälfte desselben rückwärts zu drehen, um es der Fördereinheit (220) zu erlauben, unter Steuerung der horizontalen Vorwärts-/Rückwärts-Hin-und Herbewegung des Förderers (220) rückwärts zu einer zweiten Position bewegt zu werden, die kürzer ist als die erste Position, um dadurch die Gesamtbewegungsdistanz der zu plattierenden Objekte (101), die von der Winkeländerungs- und Greifeinheit (210) innerhalb des Plattierungsbehälters (100) während der gesamten Plattierungszeit gegriffen und positioniert werden, auszudehnen.

9. Vertikale kontinuierliche Plattierungsvorrichtung nach Anspruch 2, wobei die Plattierungsabweichungs-Steuereinheit (240) umfasst:
einen Antriebsmotor (241), der dazu konfiguriert ist, als Leistungsquelle zu dienen, und einen Drehzahlminderer (242), der dazu konfiguriert ist, die Drehzahl des Motors zu reduzieren;
eine Drehwelle (243), die an einer Seite des oberen Abschnitts der Fördereinheit (220) angebracht ist, um eine Länge zu haben, die der Längsausdehnung des Plattierungsbehälters (100) entspricht, und die dazu konfiguriert ist, dass sie drehbar gelagert und durch ein Paar gegenüberliegender separater Drehwellen-Befestigungselemente (243a) fixiert ist, die so angeordnet sind, dass sie voneinander beabstandet sind, um durch den Antriebsmotor (241) und den Drehzahlminderer (242) gedreht zu werden;
ein Paar gegenüberliegender Nocken (244), die an beiden Enden der Drehwelle (243) so angebracht sind, dass sie sich zusammen mit der Drehwelle (243) integral drehen;
ein Paar gegenüberliegender Halterungen (245), die mit den Rückseiten der jeweiligen Nocken (244) verbunden sind, um die Drehbewegung in eine Linearbewegung der Nocken (244) zu konvertieren und gleichzeitig die Nocken (244) zu stützen; und
eine Fördereinheit-Verbindungsstange (246), die so gebildet ist, dass sie eine Länge aufweist, die der Längsausdehnung des Plattierungsbehälters (100) entspricht, wobei die Fördereinheit-Verbindungsstange (246) an ihren beiden Enden direkt mit den jeweiligen Halterungen (245) verbunden ist, um die linearen Bewegungen der beiden Halterungen (245) durch die jeweiligen Nocken (244) zu synchronisieren, und an einer Seite des oberen Abschnitts der Fördereinheit (220) parallel zu der Drehwelle (243) derart angebracht ist, dass sie über wenigstens eine Platte (246a) direkt mit der Fördereinheit (220) verbunden ist, so dass sich die Fördereinheit-Verbindungsstange (246) aufgrund der linearen Bewegung der Halterungen (245) zusammen mit der Fördereinheit (220) horizontal in die linke und rechte Richtung des Plattierungsbehälters hin und her bewegt.

10. Vertikale kontinuierliche Plattierungsvorrichtung nach Anspruch 9, wobei die Plattierungsabweichungs-Steuereinheit (240) die Antriebsgeschwindigkeit des Antriebsmotors (241) basierend auf der Dicke der von der Winkeländerungs- und Greifeinheit (210) gegriffenen zu plattierenden Objekte und der horizontalen Links/Rechts-Hin- und Herbewegung der Fördereinheit (220) steuert, um die Plattierungsabweichung der zu plattierenden Objekte (101) innerhalb des Plattierungsbehälters (100) zu steuern.

11. Vertikale kontinuierliche Plattierungsvorrichtung nach Anspruch 9, wobei die Plattierungsabweichungs-Steuereinheit (240) den Antrieb der Ejektoren des Plattierungsbehälters (100) und die horizontale Links/Rechts-Hin- und Herbewegung der Fördereinheit (220) basierend auf dem Seitenverhältnis der von der Winkeländerungs- und Greifeinheit (210) gegriffenen zu plattierenden Objekte (101) steuert, um die Plattierungsabweichung der zu plattierenden Objekte (101) innerhalb des Plattierungsbehälters (100) zu steuern.

12. Vertikale kontinuierliche Plattierungsvorrichtung nach Anspruch 11, wobei, wenn das Seitenverhältnis der von der Winkeländerungs- und Greifeinheit (210) gegriffenen zu plattierenden Objekte (101) 10:1 oder weniger beträgt, die Plattierungsabweichungs-Steuereinheit (240) den Antrieb der Ejektoren (110) des Plattierungsbehälters (100) stoppt und nur die horizontale Links-/Rechts-Hin- und Herbewegung der Fördereinheit (220) steuert, um die Plattierungsabweichung der zu plattierenden Objekte (101) innerhalb des Plattierungsbehälters (100) zu steuern.

## Revendications

1. Dispositif de placage continu vertical permettant de commander la déviation de placage sur la base de la différence d'épaisseur d'objets à plaquer (101), dans lequel le dispositif de placage comprend :
une cuve de placage (100) comprenant des éjecteurs (110) montés sur les parois latérales intérieures gauche et droite de celle-ci et configurés pour permettre le remplissage et la circulation dedans d'une solution de placage, éliminer l'air adhérant aux objets à plaquer (101), et maximiser le placage dans les trous, dans lequel les objets à plaquer (101) sont des substrats ; et
une unité de saisie et de transport (200) montée sur la partie supérieure de la cuve de placage (100), de manière mobile verticalement et horizontalement, et configurée pour effectuer un mouvement de va-et-vient avant/arrière, le long de la direction longitudinale de la cuve de placage (100), et gauche/droite le long de la direction transversale de la cuve de placage (100) des objets à plaquer dans la cuve de placage (100) de manière à avancer graduellement tout en saisissant verticalement les objets à plaquer (101) de manière verticalement mobile ou angulairement variable sur la partie supérieure de la cuve de placage (100) et en assurant la conduction électrique des objets à plaquer (101), de sorte que le déplacement et la distance de mouvement des objets à plaquer (101) soient commandés sur la base de l'épaisseur des objets à plaquer pour commander la déviation de placage pour chacun des objets à plaquer (101),
dans lequel l'unité de saisie et de transport (200) comprend :
une unité de changement d'angle et de saisie (210), configurée pour saisir verticalement les objets à plaquer (101) de manière angulairement variable sur la partie supérieure de la cuve de placage (100) afin de permettre un réglage angulaire des parties supérieures des objets à plaquer dans une plage angulaire allant de 0° à 90° par rapport à la direction longitudinale de la cuve de placage (100), et pour assurer la conduction électrique de chacun des objets à plaquer (101) ;
une unité de transport (220) montée sur la partie supérieure de la cuve de placage (100), de manière mobile verticalement et horizontalement, vers l'avant/l'arrière et vers la gauche/la droite, de façon à être agencée parallèlement en paire dans la direction longitudinale de la cuve de placage (100) pour permettre à l'unité de changement d'angle et de saisie (210) d'être montée en appui horizontalement dessus de sorte que l'unité de changement d'angle et de saisie (210) se déplace verticalement et horizontalement, vers l'avant/l'arrière et vers la gauche/la droite ; et
une unité de commande de distance de mouvement (230) montée au niveau d'un côté de l'unité de transport (220) et configurée pour commander un mouvement de va-et-vient avant/arrière horizontal de l'unité de transport (220) pour ajuster la distance de mouvement des objets à plaquer (101) dans la cuve de placage (100).

2. Dispositif de placage continu vertical selon la revendication 1, dans lequel l'unité de saisie et de transport (200) comprend en outre :
une unité de commande de déviation de placage (240), montée au niveau d'un côté d'une partie supérieure de l'unité de transport (220) et configurée pour commander l'entraînement des éjecteurs de la cuve de placage (100) et un mouvement de va-et-vient gauche/droit horizontal de l'unité de transport (220), sur la base de l'épaisseur des objets à plaquer (101), afin de commander la déviation de placage sur la base d'une différence d'épaisseur des objets à plaquer (101) dans la cuve de placage (100).

3. Dispositif de placage continu vertical selon la revendication 2, dans lequel l'unité de changement d'angle et de saisie (210) comprend :
une barre de montage (211) comprenant un crochet de fixation (211a) formé respectivement au niveau de chacune des extrémités de celle-ci, pour permettre aux crochets de fixation (211a) d'être montés de manière fixe sur l'unité de transport (220) dans la direction transversale de la cuve de placage (100), afin de supporter la charge de l'objet à plaquer (101) tout en effectuant un mouvement de va-et-vient avant et arrière le long de la direction longitudinale de la cuve de placage (100) par l'unité de transport (220) ;
une pince à bras multiples (212) comprenant au moins deux pinces (212a) ou plus, montées de manière à être suspendues vers le bas pour saisir les objets à plaquer (101), de sorte que la partie supérieure de chacun des objets à plaquer (101) dans la cuve de placage (100) soit saisie de manière fixe simultanément par les pinces (212a) en une pluralité de points ; et
une vis de fixation (213) configurée pour permettre à la partie inférieure de la barre de montage (211) et à la pince à bras multiples (212) d'être couplées de manière fixe ou séparées en rotation l'une de l'autre par l'intermédiaire de celle-ci.

4. Dispositif de placage continu vertical selon la revendication 3, dans lequel la barre de montage (211) comprend une tige de liaison verticale (211b) d'une certaine longueur, qui s'étend verticalement vers le bas à partir d'une partie centrale de gravité de celle-ci, la tige de liaison verticale (211b) ayant un trou d'attache de vis de fixation (211c) formé au niveau de la partie centrale d'un fond du corps de celle-ci de manière à s'étendre verticalement vers l'intérieur à partir du fond du corps de celle-ci pour permettre à la vis de fixation (213) d'être couplée à celle-ci, et
dans lequel la tige de liaison verticale (211b) dotée du trou d'attache de vis de fixation (211c) a un évidement de guidage de rotation de pince (211d) formé au niveau d'un côté du fond du corps de celle-ci de sorte qu'une section transversale du corps de celle-ci soit partiellement usinée et retirée en forme semi-circulaire pour guider le mouvement de rotation horizontal de la pince à bras multiples (212).

5. Dispositif de placage continu vertical selon la revendication 3, dans lequel la pince à bras multiples (212) comprend une pluralité de pinces (212a) montées au niveau des deux extrémités d'une tige de liaison horizontale (212b), de manière à être supportées par la tige de liaison horizontale (212b) et espacées uniformément les unes des autres,
dans lequel la pince à bras multiples (212) est configurée de sorte qu'un trou traversant de vis de fixation (212c) soit formé au niveau de la partie centrale de gravité de la tige de liaison horizontale (212b), de manière à traverser verticalement l'intérieur du corps de la tige de liaison horizontale pour permettre à la vis de fixation (213) d'être assemblée dedans ; et
dans lequel la tige de liaison horizontale (212b) dotée du trou traversant de vis de fixation (212c) a une saillie de support de rotation (212d) formée en saillie vers le haut depuis un côté du haut de la partie centrale du corps de celle-ci de manière à avoir une forme en éventail pour former son angle central d'un angle prédéterminé (90°) de sorte que la saillie de support de rotation (212d) puisse être guidée et tournée horizontalement dans l'évidement de guidage de rotation de pince (211d) de la barre de montage (211).

6. Dispositif de placage continu vertical selon la revendication 5, dans lequel la vis de fixation (213) comprend un corps fileté d'une longueur permettant son assemblage à la partie d'extrémité la plus supérieure du trou d'attache de vis de fixation (211c) de la barre de montage (211) à travers la hauteur du trou traversant de vis de fixation (212c) et de la saillie de support de rotation (212d) de la pince à bras multiples (212) ou de l'évidement de guidage de rotation de pince (211d).

7. Dispositif de placage continu vertical selon la revendication 6, dans lequel la vis de fixation (213) comprend un filetage formé sur la surface circonférentielle externe de celle-ci pour avoir un diamètre extérieur permettant à la vis de fixation (213) d'être couplée par vissage dans le trou d'attache de vis de fixation (211c) de la barre de montage (211) et le trou traversant de vis de fixation (212c) de la pince à bras multiples (212) le long des rainures de filetage du trou d'attache de vis de fixation (211c) et du trou traversant de vis de fixation (212c), de sorte que la vis de fixation (213) soit assemblée ou séparée du trou d'attache de vis de fixation (211c) formé au fond de la tige de liaison verticale (211b) à travers le trou traversant de vis de fixation (212c) de la tige de liaison horizontale (212b).

8. Dispositif de placage continu vertical selon la revendication 2, dans lequel l'unité de commande de distance de mouvement (230) fait fonctionner le moteur pour effectuer une rotation vers l'avant pendant la première moitié initiale de chaque cycle de fonctionnement de toute la durée de placage afin de permettre à l'unité de transport (220) de se déplacer vers l'avant jusqu'à une première position, et effectue de manière répétée, à chaque cycle de fonctionnement, une opération dans laquelle le moteur est amené à tourner dans le sens inverse pendant la seconde moitié suivante de celle-ci afin de permettre à l'unité de transport (220) de se déplacer vers l'arrière jusqu'à une seconde position, plus courte que la première position, lors de la commande du mouvement de va-et-vient avant/arrière horizontal de l'unité de transport (220), pour étendre ainsi la distance totale de mouvement des objets à plaquer (101) saisis et positionnés par l'unité de changement d'angle et de saisie (210) dans la cuve de placage (100) pendant toute la durée de placage.

9. Dispositif de placage continu vertical selon la revendication 2, dans lequel l'unité de commande de déviation de placage (240) comprend :
un moteur d'entraînement (241) configuré pour servir de source d'alimentation, et un réducteur de vitesse (242) configuré pour réduire la vitesse de rotation du moteur ;
un arbre rotatif (243) monté au niveau d'un côté de la partie supérieure de l'unité de transport (220) pour avoir une longueur correspondant à la longueur longitudinale de la cuve de placage (100), et configuré pour être fixé et supporté en rotation par une paire d'éléments de fixation d'arbre rotatif séparés et opposés (243a) qui sont agencés à une certaine distance l'un de l'autre, de manière à être entraîné en rotation par le moteur d'entraînement (241) et le réducteur de vitesse (242) ;
une paire de cames opposées (244) montées au niveau des deux extrémités de l'arbre rotatif (243), de manière à être entraînées en rotation solidairement avec l'arbre rotatif (243) ;
une paire de supports opposés (245) reliés aux côtés arrière des cames (244) respectives, pour convertir le mouvement rotatif des cames (244) en un mouvement linéaire, tout en soutenant les cames (244) ; et
une tige de liaison d'unité de transport (246), formée pour avoir une longueur correspondant à la longueur longitudinale de la cuve de placage (100), la tige de liaison d'unité de transport (246) étant directement reliée au niveau des deux extrémités de celle-ci aux supports (245) respectifs, de manière à synchroniser les mouvements linéaires des deux supports (245) par les cames (244) respectives, et étant montée au niveau d'un côté de la partie supérieure de l'unité de transport (220), parallèlement à l'arbre rotatif (243), de sorte qu'elle soit directement reliée à l'unité de transport (220) par au moins une plaque (246a), de sorte que la tige de liaison d'unité de transport (246) effectue un mouvement de va-et-vient horizontal dans les directions gauche et droite de la cuve de placage conjointement avec l'unité de transport (220) en raison du mouvement linéaire des supports (245).

10. Dispositif de placage continu vertical selon la revendication 9, dans lequel l'unité de commande de déviation de placage (240) commande la vitesse d'entraînement du moteur d'entraînement (241) sur la base de l'épaisseur des objets à plaquer saisis par l'unité de changement d'angle et de saisie (210) et du mouvement de va-et-vient gauche/droit horizontal de l'unité de transport (220), pour commander la déviation de placage des objets à plaquer (101) dans la cuve de placage (100).

11. Dispositif de placage continu vertical selon la revendication 9, dans lequel l'unité de commande de déviation de placage (240) commande l'entraînement des éjecteurs de la cuve de placage (100) et le mouvement de va-et-vient gauche/droit horizontal de l'unité de transport (220) en fonction du rapport d'aspect des objets à plaquer (101) saisis par l'unité de changement d'angle et de saisie (210), pour commander la déviation de placage des objets à plaquer (101) dans la cuve de placage (100).

12. Dispositif de placage continu vertical selon la revendication 11, dans lequel si le rapport d'aspect des objets à plaquer (101) saisis par l'unité de changement d'angle et de saisie (210) est de 10:1 ou moins, l'unité de commande de déviation de placage (240) arrête l'entraînement des éjecteurs (110) de la cuve de placage (100) et commande uniquement le mouvement de va-et-vient gauche/droit horizontal de l'unité de transport (220) pour commander la déviation de placage des objets à plaquer (101) dans la cuve de placage (100).
